# FASCICULE DE BREVET EUROPEEN

(11) **EP 0 338 936 B1**
(45) Date de publication et mention de la délivrance du brevet: **22.12.1993**
(21) Numéro de dépôt: 89401130.3
(22) Date de dépôt: 21.04.1989
(51) Int. Cl.: G06F 15/44, A63F 9/22, G06F 1/00

(54) **Dispositif portable électronique destiné à être utilisé en liaison avec un écran**
Tragbares elektronisches Gerät zur Benutzung in Verbindung mit einem Bildschirm
Hand-held electronic device to be used in conjuction with a screen

(30) Priorité: 21.04.1988 FR 8805306
(43) Date de publication de la demande: 25.10.1989
(60) Demande divisionnaire: 93105918.2
(73) Titulaire: TELECASH, 92130 Issy les Moulineaux (FR)
(72) Inventeur: Audebert, Yves, F-78290 Croissy Sur Seine (FR); Delahaye, Achille, F-94120 Fontenay Sous Bois (FR)
(74) Mandataire: Colas, Jean-Pierre

(56) Documents cités:
- EP-A- 0 058 029
- EP-A- 0 167 044
- EP-A- 0 203 683
- EP-A- 0 267 085
- WO-A-81/01664
- WO-A-85/03785
- WO-A-87/01835
- GB-A- 2 126 460
- GB-A- 2 143 636
- US-A- 4 592 546
- US-A- 4 593 376
- L'USINE NOUVELLE, no. 38, 22 septembre 1988, page 68, A. DIEUL: "Une carte à puce pour le téléviseur".
- COMPUTERS & SECURITY, vol. 5, no. 1, mars 1986, Amsterdam, Netherlands; H.J. Highland: "Random bits & Bytes" pages 4-6.
- ONDE ELECTRIQUE, vol. 64, no. 1, janvier/février 1984, pages 18-23, Paris, France; Ch. Guion: "La carte à mémoire: choix technologiques et caractéristiques".
- COMPUTERS & SECURITY, vol. 4, no. 2, juin 1985, pages 123-134, Elmont, New York, US; H.J. Highland: "Microcomputer Security: Data Protection Techniques"

## Description

L'invention est relative à un dispositif portable électronique, du genre carte à microprocesseur, comprenant au moins des moyens de réception optique, un microcalculateur propre à traiter les informations reçues, un afficheur pour afficher des informations provenant du microcalculateur, et une source d'énergie électrique pour alimenter les divers circuits.

L' état de la technique, notamment WO 87/01835, décrit un dispositif portable électronique comprenant des moyens de réception optique, un microcalculateur, un afficheur, une mémoire et un clavier. Ce dispositif est cependent utilisé pour lire une grande quantité de données affichées sur l'écran d'un ordinateur, d'y produire un code secret, afficher ce code secret sur son afficheur pour qu'un utilisateur puisse s'identifier à l'ordinateur et gagner accès en introduisant ce code secret par le clavier de l'ordinateur.

Un tel dispositif portable électronique offre un degré d'application limité au contrôle d'accès à un système informatique. L'invention a pour but de fournir un dispositif portable électronique, tel que celui défini précédemment, qui permette d'accomplir un maximum de fonctions et d'applications tout en conservant une sûreté d'emploi suffisante et une protection efficace contre des utilisations frauduleuses.

Il est souhaitable, en outre, qu'un tel dispositif reste d'un encombrement réduit, d'un prix relativement bas pour permettre sa diffusion à grande échelle, et d'une mise en oeuvre simple.

Selon l'invention, un dispositif portable électronique qui comprend au moins des moyens de réception optique, un microcalculateur propre à traiter les informations reçues, un afficheur pour afficher des informations provenant du microcalculateur, et une source d'énergie électrique pour alimenter les divers circuits, est caractérisé par le fait qu'il comporte un clavier permettant à l'utilisateur d'entrer également des informations dans le microcalculateur, et que ce microcalculateur est programmé pour utiliser les informations provenant des moyens de réception optique et/ou du clavier et pour faire afficher des résultats tenant compte de ces informations, éventuellement conjuguées.

Cette combinaison de moyens : moyens de réception optique d'informations externes ; clavier permettant la réception d'informations propres à l'utilisateur, afficheur, microcalculateur et pile électrique, comme source d'énergie, permet au dispositif un fonctionnement autonome. Il peut notamment fonctionner avec une télévision, un terminal télématique, "MINITEL" par exemple, ou un terminal informatique.

Un tel dispositif peut être utilisé pour établir un lien entre les réseaux télématiques, les réseaux câblés et la télédiffusion hertzienne.

Le microcalculateur peut être programmé pour permettre de nombreuses applications, sans modifications du parc d'écrans existants, telles que le télépari, c'est-à-dire le pari par "MINITEL", le pari et le jeu en direct à la télévision, la sélection d'échantillonnage de population par la télévision, le téléachat, le paiement de services (télévision à péage à abonnement ou à la consommation), le contrôle d'accès à des ressources informatiques ou à un serveur.

Lorsque l'utilisation nécessite une protection du dispositif, le microcalculateur est programmé pour ne rendre ce dispositif actif qu'après introduction, sur le clavier, d'un code confidentiel d'identification de l'utilisateur du dispositif.

Le dispositif portable électronique comprend de préférence une mémoire de stockage pour le stockage d'informations provenant de l'extérieur.

L'afficheur est avantageusement du type à cristaux liquides (LCD) et peut comporter huit caractères alphanumériques alignés.

Le dispositif a de préférence la forme d'un boîtier parallélépipédique rectangle de faible épaisseur, notamment de l'ordre de 5 mm. Les moyens de réception optique sont avantageusement constitués par des phototransistors ; ces phototransistors sont disposés sur la tranche d'un petit côté du boîtier. Les phototransistors sont de préférence au plus au nombre de trois, alignés.

Les phototransistors permettent de recevoir des informations optiques d'un écran ou de composants actifs, de type diodes électroluminescentes, modulés par un signal électrique.

Les trois phototransistors alignés permettent d'obtenir un dispositif plat qui peut être pointé vers l'écran et peut s'adapter sans paramétrage aux tailles communes d'écrans de terminaux informatiques ou télématiques.

Le nombre de phototransistors peut être inférieur à trois ; deux phototransistors, tout en permettant de conserver l'avantage de l'adaptation aux différentes tailles d'écran, ne permettent qu'un débit plus faible.

Une disposition à quatre phototransistors, ou plus, en ligne ne permettrait plus l'adaptation aux différentes tailles d'écran sans paramétrage. Quatre phototransistors disposés en carré permettent une adaptation à tous les écrans, mais impliquent de plaquer le produit à l'écran, rendant le dispositif moins ergonomique et mal adapté aux petits terminaux.

Avantageusement, les extrémités du côté du boîtier, comportant les phototransistors, sont munies de tampons, notamment en matière élastomère, de forme sensiblement hémisphérique, permettant un meilleur appui du boîtier contre un écran bombé.

Le microcalculateur est avantageusement programmé de telle sorte qu'une temporisation soit prévue pour faire retourner le dispositif électronique à l'état de repos, au bout d'un temps prédéterminé, notamment quatre minutes, après que le dispositif a été activé par entrée du code confidentiel correct d'identification.

Le microcalculateur peut être en outre programmé de manière à bloquer le dispositif après entrée consécutive d'un certain nombre de codes confidentiels erronés, par exemple quatre codes, la réactivation du produit ne pouvant être assurée que par une procédure ou un outil spécial.

Le dispositif portable électronique, conforme à l'invention, peut être destiné à être utilisé pour autoriser une connexion à un serveur, à partir d'un terminal ou équivalent ; dans ce cas, le microcalculateur est programmé pour assurer, lorsque la fonction d'identification a été remplie, une fonction d'authentification au niveau du serveur, en calculant, à partir d'informations provenant du serveur, suivant un algorithme, un code qui apparaît sur l'afficheur du dispositif et que l'utilisateur doit entrer sur un clavier d'un terminal relié au serveur, un calcul de code étant effectué également par le serveur, suivant un algorithme semblable, et une comparaison du code calculé par le serveur et du code introduit par l'utilisateur étant effectuée par le serveur ; si cette comparaison établit une cohérence entre ces deux codes, l'accès au serveur est donné à l'utilisateur alors que, en l'absence de cohérence entre les deux codes, ces accès reste interdit.

Le dispositif comporte, en dehors d'une horloge système propre au microcalculateur, une horloge temps réel permettant de donner au dispositif une durée de vie limitée, faire fonctionner le dispositif suivant des tranches horaires et/ou dater les opérations, notamment utilisations et transactions effectuées avec ce dispositif portable.

Le dispositif comporte une mémoire morte (ROM) organisée en deux zones, à savoir :
- une zone programme dans laquelle sont stockées les instructions relatives à :
   - la fonction de décodage et réception optique ;
   - la fonction d'identification ;
   - la fonction d'authentification ;
   - les fonctions applicatives, telles que pari, jeu télévisé, porte-monnaie, télé-achat ;
- et une zone fabrication pour mémoriser les informations relatives à la fabrication de la carte et pour initialiser le produit, ces informations concernant :
   - le code client ;
   - le numéro du masque utilisé pour le microcalculateur ;
   - la clé de fabrication, notamment constituée par 128 bits, permettant le contrôle de la personnalisation.

   La mémoire de stockage du dispositif est également organisée en deux zones, à savoir :
- une zone données, pour le stockage d'informations concernant, par exemple, un pari, un jeu, un montant, un nombre de films visionnés dans le cadre d'une télévision à péage, des certificats de transaction, etc... ;
- et une zone personnalisation contenant les informations relatives :
   - au code confidentiel (identification);
   - à la clé secrète d'authentification ;
   - aux paramètres d'exploitation (par exemple blocage de la carte au bout de quatre essais infructueux d'identification) ;
   - les diverses clés secrètes éventuellement nécessaires pour les fonctions applicatives.

La mémoire de stockage peut être une PROM ou une EEPROM, comme dans les cartes à mémoire ou à microprocesseur, ou une RAM sauvegardée.

Les solutions PROM ou EEPROM nécessitent des tensions et courants d'alimentation relativement importants. Pour des raisons de sécurité, ces mémoires ne peuvent être programmées de l'extérieur nécessitant, comme sur la carte à microprocesseur, une autoprogrammation par le microcalculateur. Ces solutions offrent un bon degré de sécurité mais sont onéreuses ; elles se justifient cependant pour certaines applications.

Une solution plus simple et moins chère est avantageusement réalisée à partir d'une RAM (mémoire vive), interne au microcalculateur, sauvegardée par l'alimentation du dispositif avec un courant très faible et dont l'accès en écriture pour la zone personnalisation peut être protégée, notamment par un fusible qui est grillé après la phase de personnalisation.

Le microcalculateur comporte un bus de données et un bus d'adresses non accessibles de l'extérieur, de telle sorte qu'on ne peut lire ni modifier frauduleusement, de l'extérieur, les informations du dispositif.

Le clavier du dispositif est de préférence un clavier numérique comportant douze à seize touches, à savoir dix touches correspondant aux chiffres 0̸ à 9 et deux à six touches fonctions supplémentaires qui peuvent avantageusement être personnalisées en fonction de l'application (pari, jeu, télévision à péage). L'afficheur est du type alphanumérique LCD.

L'invention consiste, mises à part les dispositions exposées ci-dessus, en un certain nombre d'autres dispositions dont il sera plus explicitement question ci-après à propos d'un mode de réalisation particulier décrit avec référence aux dessins ci-annexés, mais qui n'est nullement limitatif.

La figure 1, de ces dessins, est un schéma synoptique simplifié d'un dispositif portable électronique conforme à l'invention.

La figure 2 est une vue en plan du dispositif.

La figure 3 est une vue suivant la flèche III, figure 2.

La figure 4 est une vue suivant la flèche IV, figure 2.

La figure 5 est un schéma illustrant le principe de l'identification et de l'authentification.

La figure 6 est un schéma illustrant la seule fonction d'identification.

La figure 7 est un schéma illustrant la fonction d'authentification.

La figure 8 est un schéma illustrant l'utilisation d'un dispositif selon l'invention avec un boîtier d'adaptation directement raccordé à un terminal.

La figure 9 est un schéma illustrant le scénario de connexion entre un terminal et un serveur en utilisant le dispositif de l'invention.

La figure 10̸ est un schéma semblable à celui de la figure 9, pour une fonction porte-monnaie.

La figure 11 est un schéma illustrant l'intérêt du dispositif de lecture à trois phototransistors pour des écrans de tailles différentes.

La figure 12 est un schéma d'un circuit d'autoadaptativité à un écran.

La figure 13, enfin, est un diagramme illustrant le fonctionnment du circuit de la figure 12.

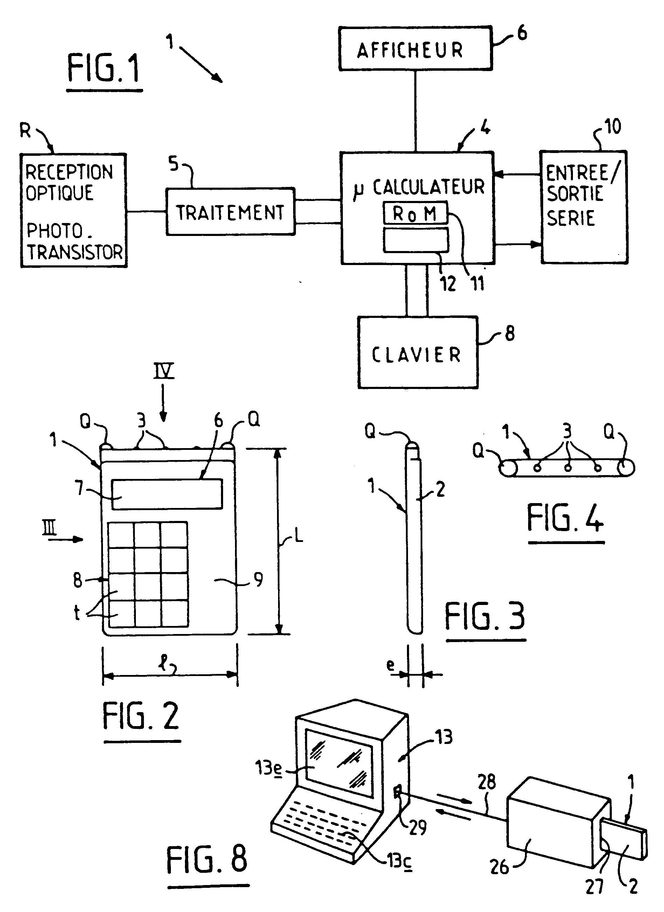

En se reportant aux dessins, notamment aux figures 1 à 4, on peut voir un dispositif portable électronique 1, du genre carte à mémoire, comprenant un boîtier extérieur 2 de forme parallélépipédique rectangle, et dont l'épaisseur e (figure 3) est faible, notamment de l'ordre de 5 mm. La largeur l et la longueur L du boîtier peuvent être égales à celles utilisées de manière générale pour les cartes de crédit, cartes bancaires, etc..., c'est-à-dire de l'ordre de 54 mm pour l et de 85 mm pour L.

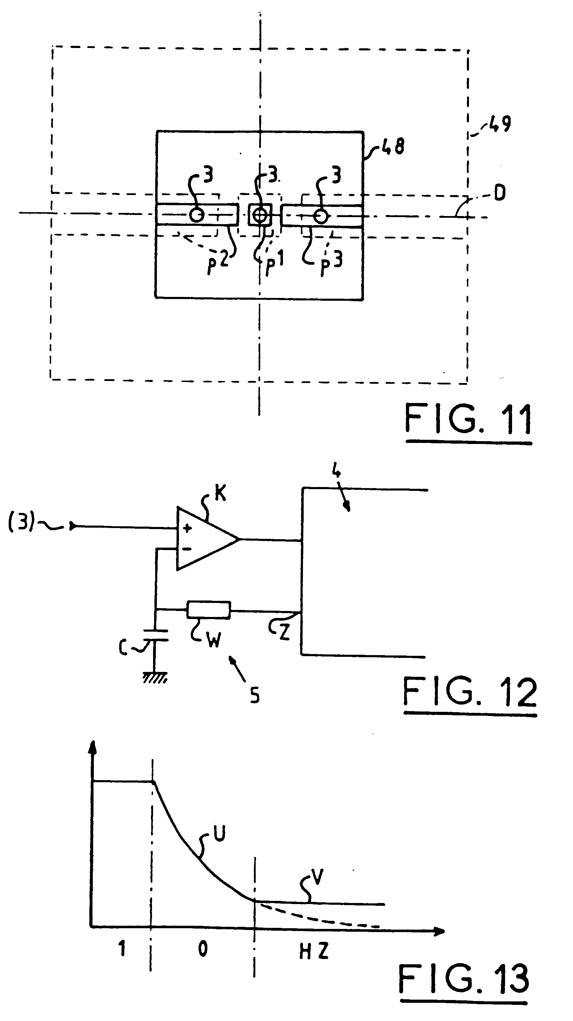

Le dispositif comprend au moins des moyens de réception optique R avantageusement constitués par des phototransistors 3 (figure 4) disposés sur la tranche d'un petit côté du boîtier 2, et en particulier alignés. Dans l'exemple considéré, les phototransistors sont au nombre de trois. La figure 11 illustre l'intérêt du dispositif de lecture à au plus trois phototransistors 3, pour des écrans 48, 49 de tailles différentes. L'écran 48 correspond à la plus petite taille, et l'écran 49 à la plus grande taille.

Lorsque l'on passe d'une taille d'écran à une autre, l'écartement entre les centres des pavés lumineux p1, p2, p3 va changer, alors que l'écartement entre les phototransistors 3 reste constant.

Avec la disposition à au plus trois phototransistors, l'ensemble des pavés est toujours centré et il est possible d'allonger les pavés droite et gauche p2, p3, suivant la direction d'alignement D des phototransistors, de manière à être sûr que, quelle que soit la taille de l'écran, les phototransistors droite et gauche se trouvent toujours en face d'une partie des pavés p2, p3 correspondants.

L'écran d'un terminal a généralement une forme convexe. Pour faciliter l'application de la tranche du boîtier 2, munie des phototransistors 3, contre cet écran, on prévoit avantageusement, à chaque extrémité de la tranche, un tampon Q (voir figure 2), notamment en matière élastomère et de forme sensiblement hémisphérique, faisant saillie sur cette tranche.

Les moyens de réception R, comme illustré sur la figure 1, sont reliés à un microcalculateur 4, par l'intermédiaire de moyens de traitement 5 propres à réaliser une auto-adaptativité à un écran de terminal 13.

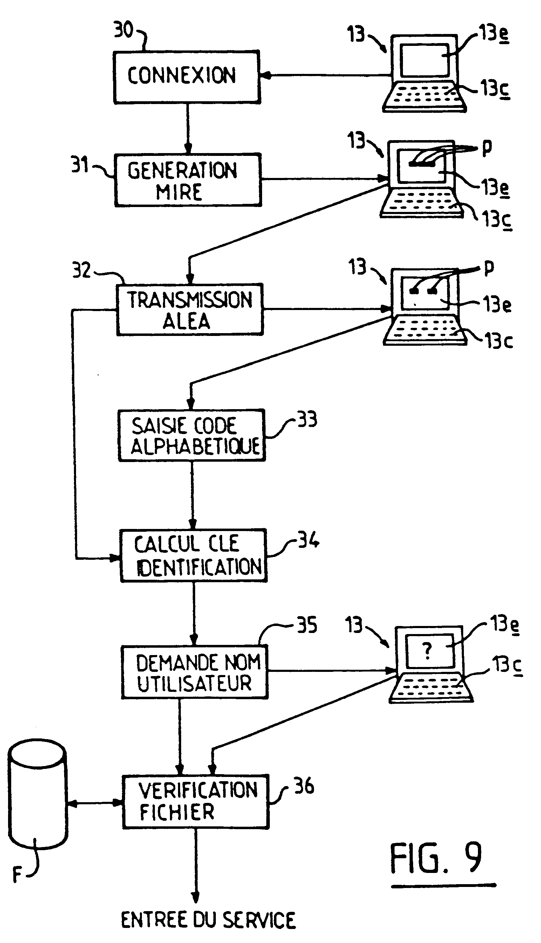

En effet, la transmission d'informations destinées aux moyens R s'effectue par une séquence de pavés lumineux et sombres p (voir figure 8) qui apparaissent en une zone prédéterminée d'un écran 13e de terminal 13 ; en raison des variations de luminosité d'un écran de terminal à un autre, il est possible qu'un pavé sombre d'un terminal soit plus lumineux qu'un pavé éclairé d'un autre terminal. Pour éviter les distorsions de lecture d'un terminal à l'autre, les moyens de traitement 5 sont prévus pour permettre, au cours d'une phase d'initialisation, d'ajuster un seuil de comparaison en fonction de la luminosité de l'écran du terminal. Pour tenir compte de la dispersion de sensibilité des phototransistors, le seuil de comparaison peut être défini pour chacun des phototransistors.

Comme visible sur la figure 12, ce seuil peut être obtenu par la décharge d'une capacité C, sous le contrôle du microcalculateur 4, à travers une résistance W. La charge et la décharge de la capacité C sont contrôlées par le microcalculateur 4 à travers la résistance W au moyen d'un port d'entrée/sortie Z qui peut être placé dans les états suivants : état haut ("1") pour la charge de la capacité C, état bas ("0̸") pour sa décharge ; état haute impédance ("HZ") par le maintien du seuil pendant la réception. Un comparateur K reçoit, sur une entrée + le signal provenant des phototransistors et sur l'autre entrée - la tension aux bornes de la capacité C, seuil de comparaison. Avant mise en service, la capacité C est chargée à sa valeur maximale. Pendant l'initialisation, la capacité C se décharge comme représenté par l'arc de courbe U de la figure 13 (tension aux bornes de la capacité en ordonnées, temps en abscisse), jusqu'à atteindre la valeur souhaitée, fonction du niveau de réception et déterminée par le microcalculateur. Le seuil de comparaison est alors maintenu constant comme représenté par le segment V de la figure 13, pendant la réception. Ce seuil de comparaison est donc fonction du niveau de réception optique. Ce seuil variable peut être complété par un seul fixe pour les faibles luminosités. Le même effet peut être obtenu en contrôlant le gain d'un amplificateur par le microcalculateur.

Le codage de la transmission optique est défini de manière à diminuer le temps de transmission et s'adapter à tous les réseaux et protocoles reliant le terminal au système central. Les caractéristiques principales de cette transmission dans le cadre d'un système informatique sont qu'il est seulement possible de maîtriser le séquencement des pavés affichés mais pas les temps d'affichage. Ces caractéristiques justifient l'utilisation d'au moins deux phototransistors pour la transmission sur un écran informatique. Les caractéristiques de transmission sur télévision hertzienne ou câblée permettent le contrôle des temps d'affichage offrant la possibilité d'une transmission synchrone par l'intermédiaire d'un seul phototransistor. La synchronisation de la transmission s'effectue à l'aide du balayage video. Ceci permet au dispositif portable lorsqu'il est utilisé avec la télévision de fonctionner et recevoir les informations à distance (quelques mètres) en pointant le produit vers l'écran.

Les fonctions de réception et décodage optiques inscrites dans la mémoire du microcalculateur du dispositif portable pourront être spécifiques au mode d'exploitation, télématique ou télévision, mais le même dispositif pourra fonctionner sur les deux supports en utilisant un ou trois phototransistors.

Le dispositif 1 comprend un afficheur 6, de préférence à cristaux liquides (LCD), formant un écran rectangulaire 7 (figure 2) sur le boîtier. De préférence, cet écran 7 est prévu pour afficher huit caractères alphanumériques, alignés. L'afficheur 6 permet de visualiser des informations provenant du microcalculateur 4.

Une source d'énergie électrique, généralement constituée par une pile électrique de dimensions réduites (non représentée sur les dessins), est prévue pour alimenter les divers circuits.

Le dispositif comporte un clavier 8 notamment constitué, comme représenté sur la figure 2, par douze touches t correspondant respectivement aux dix chiffres 0̸ à 9. Les touches t sont disposées en quatre rangées de trois, parallèles à l'écran 7. Le clavier 8 est disposé adjacent à un bord du boîtier 2, le bord gauche selon la représentation de la figure 2, pour qu'une surface 9, relativement importante, soit dégagée sur la droite et exploitable graphiquement.

Le clavier 8 permet à l'utilisateur d'entrer également des informations dans le microcalculateur 4.

Avantageusement, le boîtier 2 comporte des moyens d'entrée-sortie série 10̸ reliés au microcalculateur 4. Ces moyens peuvent être une prise ou des moyens de couplage optique, l'entrée optique pouvant avantageusement être réalisée par un des trois phototransistors. Une telle prise 10̸ permet un raccordement direct sur une prise prévue dans un boîter d'adaptation 26 dont il sera question à propos de la figure 8.

Le microcalculateur 4 est un microcalculateur masqué, en technologie C MOS. Il peut être du type MC 68 HC 0̸5B6, de "Motorola", pour une version microcalculateur autoprogrammable, ou du type NEC 7530̸8 pour une version à mémoire de stockage RAM, ou alors du type circuit spécifique (ASIC) pour une version à RAM protégée. Le circuit spécifique sera développé à partir d'un microcalculateur standard des types précédents dans lesquels on inclura les moyens de protection de la mémoire. Ces moyens de protection pourront être constitués par un fusible grillé après écriture de la mémoire. Il comporte une mémoire morte (ROM) 11 et une mémoire de stockage 12.

La mémoire morte 11 est organisée en deux zones à savoir une zone programme et une zone fabrication, dont il sera question plus loin.

La mémoire 12 est également organisée en deux zones à savoir une zone données, et une zone personnalisation, dont il sera question plus loin.

Le bus de données et le bus d'adresses (non représentés sur les dessins) du microcalculateur 4 ne sont pas accessibles de l'extérieur, de manière à rendre impossible une lecture ou une modification frauduleuse, depuis l'extérieur, des informations contenues par le dispositif 1.

Le microcalculateur 4 est programmé (les instructions du programme sont stockées dans la mémoire morte 11) pour ne rendre actif le dispositif qu'après introduction, sur le clavier 8, d'un code confidentiel d'identification PIN de l'utilisateur du dispositif. Ce code confidentiel est connu seulement du titulaire du dispositif 1.

Une temporisation est avantageusement prévue pour faire retourner le microcalculateur 4 à l'état de repos au bout d'un temps prédéterminé, notamment de 4 minutes, après que ce microcalculateur a été activé par entrée du code confidentiel correct. L'état de repos du microcalculateur 4 correspond à un état dans lequel ce microcalculateur ne prend pas en compte les informations provenant des moyens de réception R.

Le programme stocké dans la mémoire 11 est en outre prévu pour bloquer le dispositif 1 après entrée consécutive d'un certain nombre de codes confidentiels erronés sur le clavier 8, par exemple quatre codes. Le dispositif 1 devient alors inutilisable, et la réactivation du dispositif ne peut être assuré que par une procédure spéciale par exemple sur un centre serveur.

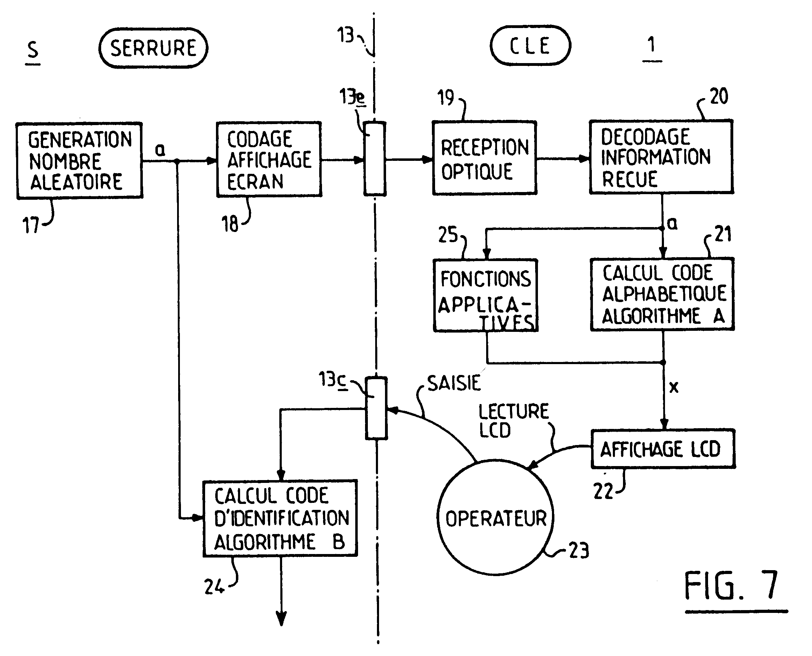

Le dispositif 1 étant, en application de base, destiné à autoriser une connexion sur un serveur, à partir d'un terminal 13 ou équivalent (console de "MINITEL"), le microcalculateur 4 est programmé (instructions stockées dans la zone programme de la mémoire 11) pour assurer une fonction d'authentification vis-à-vis du serveur S. Pour cela le microcalculateur calcule, à partir d'informations provenant du serveur, suivant un algorithme, un code qui apparaît sur l'afficheur 6. L'utilisateur doit alors entrer ce code sur le clavier 13c d'un terminal 13 (voir figures 7 et 9) relié au serveur. Le calcul d'un code est effectué également par le serveur, suivant un algorithme semblable, et une comparaison du code calculé par le serveur et du code introduit par l'utilisateur est effectué par le serveur ; si une cohérence est constatée entre les deux codes, l'accès au serveur est donné à l'utilisateur ; si aucune cohérence n'apparaît entre les deux codes calculés, l'accès au serveur reste interdit à l'utilisateur.

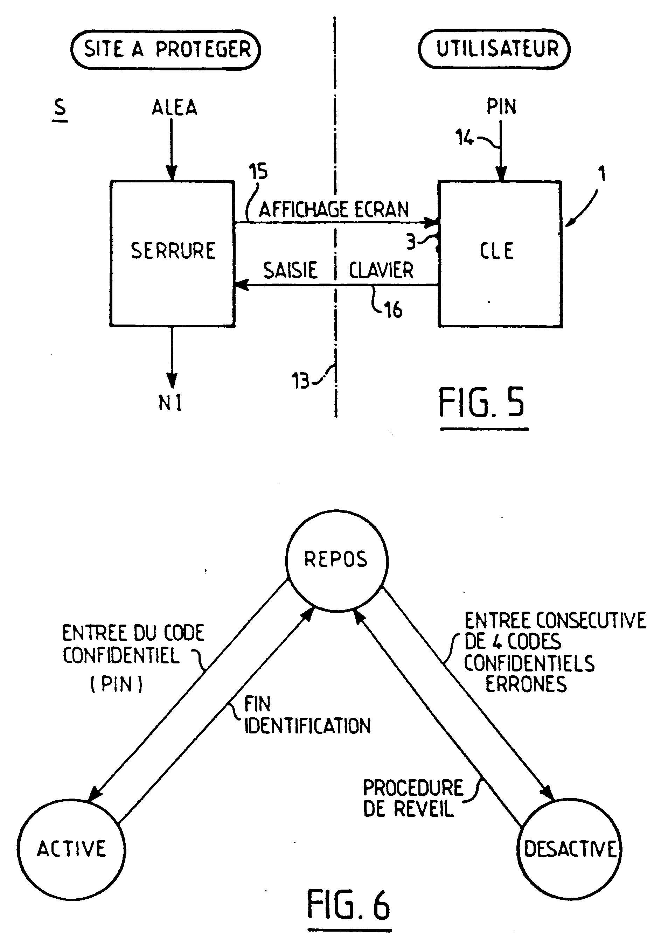

Les figures 5 à 7, et la figure 9 permettent de mieux illustrer ces caractéristiques.

Sur la figure 5 on a schématiquement représenté en S le serveur ou site à protéger, sur la partie gauche de cette figure. Le trait mixte 13 représente schématiquement un terminal, constituant une interface, située à distance du serveur S et reliée, par exemple par un câble, à ce dernier. Ce terminal 13 comporte un écran et un clavier non représentés sur la figure 5. Le dispositif 1 conforme à l'invention est schématiquement représenté sur la partie droite de cette figure 5. Pour pouvoir accéder au serveur S depuis le terminal 13, l'utilisateur doit d'abord introduire son code personnel d'identification PIN sur le clavier 8 du dispositif 1, ce qui est schématisé par la flèche 14.

Si le code est correct, le dispositif 1 est prêt à recevoir des informations, ce qui peut être signalé par un message sur l'écran 7 (figure 2).

Le déroulement des opérations sera décrit plus en détail à propos des figures 7 et 9. Le schéma de la figure 5 fait apparaître que, lors de l'authentification, le dispositif 1 se comporte comme une clé, tandis que le serveur S se comporte comme une serrure. La flèche 15 symbolise l'affichage sur l'écran du terminal 13 d'informations provenant du serveur, tandis que la flèche 16 symbolise la saisie d'informations à partir du clavier du terminal 13.

Le schéma de la figure 6 illustre la fonction d'identification.

Initialement, le dispositif 1 est à l'état de repos schématisé par le cercle supérieur du schéma.

L'entrée du code confidentiel, par l'utilisateur, sur le clavier 8 fait passer le dispositif à l'état activée schématisé par le cercle situé en bas à gauche de la figure 6. Dans cet état, le dispositif est propre à recevoir et à traiter les informations optiques apparaissant sur le terminal, pour permettre à l'utilisateur d'accéder à un serveur.

Au bout d'un temps prédéterminé par une temporisation, notamment de l'ordre de 4 minutes, qui correspond à la fin de la fonction d'identification, le dispositif 1 retourne à l'état de repos.

S'il y a entrée consécutive de plusieurs codes confidentiels erronés, par exemple quatre codes successifs erronés, le dispositif 1 passe de l'état de repos à un état désactivé représenté par un cercle situé à droite sur la figure 6, interdisant toute utilisation du dispositif.

Le retour de l'état désactivé à l'état de repos ne peut être assuré que par une procédure de réveil qui ne peut être effectuée que sur un centre serveur, dans l'exemple décrit.

La figure 7 est un schéma fonctionnel illustrant la fonction d'authentification évoquée à propos du schéma de la figure 5. La partie gauche de cette figure correspond à l'automate de communication ou serrure du serveur S. La partie située à droite du trait mixte (lequel schématise le terminal 13) correspond à la clé constituée par le dispositif 1.

Le bloc 17 correspond à la génération d'un nombre aléatoire a par le serveur S. Le bloc 18 correspond au codage et à l'affichage sur l'écran 13e du terminal. Le bloc 19 correspond à la réception optique, par les phototransistors 3 du dispositif 1. Le bloc 20̸ correspond au décodage, par le microcalculateur 4, de l'information reçue. Le bloc 21 correspond au calcul par le microcalculateur 4, du code alphabétique, à partir de l'information reçue a, suivant un algorithme A. Le bloc 22 correspond à l'affichage sur l'écran 7 du dispositif 1 du résultat x correspondant au code calculé en 21.

L'utilisateur ou opérateur, schématisé par un cercle 23, après lecture sur l'écran 7, introduit sur le clavier 13c du terminal 13 le code affiché sur l'écran 7.

Le bloc 24 correspond, dans le serveur S, au calcul d'un code d'identification suivant un algorithme B à partir du nombre aléatoire a, et à la comparaison de ce code calculé, dans le serveur S, avec celui introduit par l'opérateur 23 sur le clavier 13c.

Si la comparaison entre les deux codes établit une cohérence, en accord avec les algorithmes A et B, l'accès du système est donné à l'opérateur 23.

En cas d'absence de cohérence, l'accès demeure interdit.

Le bloc 25, relatif au dispositif 1, concerne des fonctions applicatives programmées dans le microcalculateur 4, telles que jeux de télévision, télé pari, télévision à péage, porte-monnaie, téléachat.

Certaines opérations nécessitent de maintenir relativement longtemps le boîtier 1 contre l'écran 13e du terminal pour les échanges d'informations.

Pour éviter à l'opérateur d'avoir à tenir le boîtier 2, on peut prévoir un boîtier d'adaptation 26 (figure 8) pour la mise en oeuvre des fonctions nécessitant un échange d'informations important. Ce boîtier comporte un logement débouchant, à l'extérieur, par une ouverture 27 dans laquelle peut être engagé le boîtier 2 du dispositif. Le fond du logement 27 est équipé de moyens complémentaires des moyens 10̸ (figure 1). Le boîtier 26 est raccordé à un câble 28 dont l'autre extrémité peut être branchée sur une prise 29, notamment du type RS 232 C, du terminal 13 ou sur la prise péri-informatique du MINITEL.

La figure 9 est un schéma du scénario de connexion d'un terminal 13 à un serveur S, à l'aide du dispositif 1 de l'invention. Cette figure 9 explicite les fonctions décrites à propos de la figure 7.

L'opérateur, à partir du terminal 13, établit tout d'abord la connexion avec le serveur S, en tapant, sur le clavier 13c du terminal 13, un numéro prédéterminé. Le bloc 30̸ correspond à l'établissement de la connexion. Le serveur S génère une mire (bloc 31) c'est-à-dire fait apparaître sur l'écran 13e du terminal des pavés lumineux p qui, dans l'exemple considéré, sont constitués par trois rectangles alignés comme représenté sur la figure 9.

L'utilisateur présente alors le dispositif 1 manière à placer les phototransistors 3 en face des pavés p. Le dispositif 1 est en place pour recevoir les informations par voie optique. Bien entendu, auparavant, l'utilisateur a dû valider le dispositif 1 en introduisant sur le clavier 8 du boîtier 2 son code confidentiel permettant son identification.

L'utilisateur appuie alors sur une touche du clavier 13c du terminal. Le serveur S, en réponse à l'enfoncement de la touche du clavier 13c, génère et transmet, au terminal 13, sous forme codée, un nombre aléatoire,comme indiqué par le bloc 32. Les informations correspondant à ce nombre aléatoire se traduisent sur l'écran 13e par des variations de niveaux de luminosité des pavés p, informations qui sont reçues par le dispositif 1. Ce dernier fait apparaître sur l'écran 7 un code alphabétique ou alphanumérique que l'utilisateur introduit sur le clavier 13c, ce qui correspond au bloc 33 de saisie par le serveur S.

Le bloc 34 correspond au calcul, par le serveur S, du code à partir du nombre aléatoire généré en 32, et à la comparaison de ce code calculé avec celui fourni à partir du clavier 13c.

Lorsqu'il y a cohérence de ces deux codes, le serveur S peut compléter l'identification de l'utilisateur, avant de donner accès au service, en demandant le nom de l'utilisateur (bloc 35). L'utilisateur tape alors son nom sur le clavier 13c.

La dernière étape accomplie par le serveur, avant de donner accès au service, est de vérifier, dans un fichier F, comme indiqué par le bloc 36, la concordance entre la clé d'identification, le nom et les droits d'accès. Lorsque la concordance est établie, l'utilisateur est connecté au service qu'il peut utiliser.

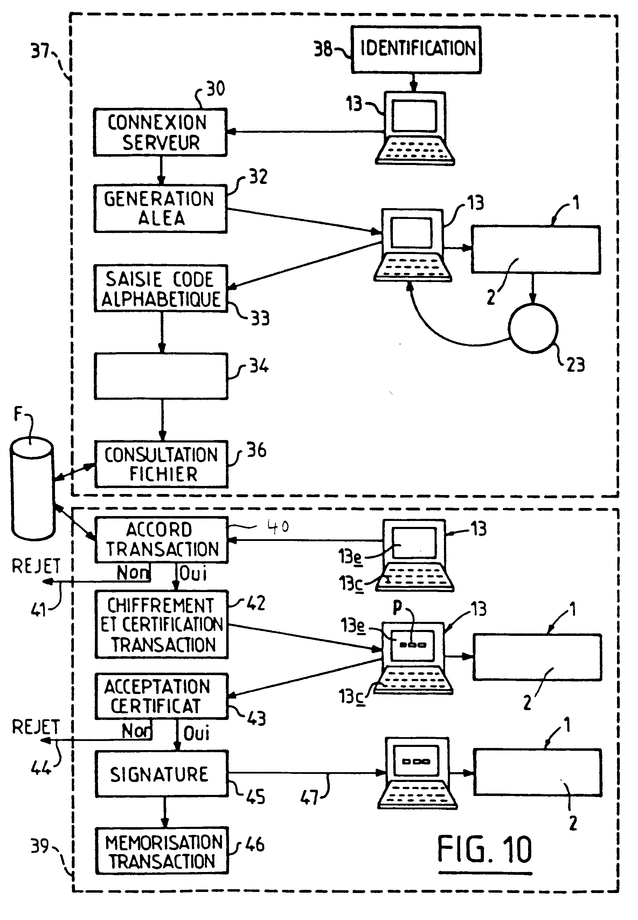

La figure 10̸ est un schéma illustrant une fonction porte-monnaie qui peut être assurée par le dispositif 1 de l'invention.

Cette fonction permet le chargement d'une somme d'argent prédéterminée ou d'un nombre de jetons dans le dispositif 1, plus précisément dans la mémoire de stockage 12 de ce dispositif, à partir d'un serveur S dans lequel le détenteur du dispositif 1 a préalablement ouvert et approvisionné un compte. Cette fonction permet, ensuite, d'accéder à des services du type télévision à péage, par abonnement ou à la consommation, ou à des paris, ou d'autres applications par prélèvement sur la somme d'argent qui a été chargée dans la mémoire de stockage 12 du dispositif 1.

Le schéma de la figure 10̸ présente un exemple d'implantation de la fonction porte-monnaie.

Les premières étapes de ce programme correspondent à la mise en oeuvre préalable des fonctions d'identification du porteur du dispositif 1 et d'authentification de ce porteur vis à vis du serveur. Ces étapes ont été représentées à l'intérieur d'un rectangle 37 et correspondent, sensiblement, à la figure 9 simplifiée, certaines étapes intermédiaires n'ayant pas été reprises dans le rectangle 37. Les mêmes références ont été utilisées sur la figure 10̸ pour désigner des blocs semblables à ceux de la figure 9 sans que leur description soit reprise. Le bloc 38 correspond à l'identification de l'utilisateur par introduction du code PIN confidentiel sur le clavier 8 du boîtier 2.

Le rectangle 39 englobe les étapes du programme concernant les opérations après que l'entrée du service porte-monnaie a été donnée à l'utilisateur qui se trouve devant le terminal 13 avec son dispositif 1.

L'utilisateur, à partir du terminal 13, effectue, sur le clavier 13c, une demande de chargement, sur son dispositif 1, d'une somme d'argent d'un montant déterminé. L'examen de cette demande est effectué dans le bloc 40̸ ; le serveur S interroge son fichier F pour savoir si le crédit du compte de l'utilisateur est suffisant pour permettre le chargement de la somme demandée. Si la réponse est négative, la demande est rejetée comme schématisé par la sortie 41.

Si la réponse est affirmative, le programme du serveur S passe à l'étape 42 pour le chiffrement et la certification de la transaction. Le serveur S transmet les informations correspondantes au terminal 13, ces informations apparaissant sous la forme de pavés lumineux p clairs ou obscurs sur l'écran 13e. Le dispositif 1 est appliqué, par l'utilisateur, contre l'écran 13e par sa tranche munie des phototransistors 3 pour recueillir les informations contenues dans les pavés p.

L'utilisateur ou opérateur doit alors taper sur le clavier 13c une instruction correspondant soit à l'acceptation du certificat de transaction et de la somme annoncée par le serveur S, soit refuser le certificat ; l'absence de réponse de l'opérateur sera considérée comme un refus.

Le bloc 43 correspond à l'étape du programme du serveur S qui fait suite à la réponse de l'opérateur. Si cette réponse est négative, la transaction est rejetée en 44. Si la réponse est positive, le programme du serveur passe à l'étape suivante représentée par le bloc 45 correspondant à la signature, c'est-à-dire que, du côté du serveur, les informations relatives à la transaction sont mémorisées comme indiqué par le bloc 46, tandis que du côté dispositif 1 la somme demandée par l'opérateur est effectivement stockée dans la mémoire de stockage 12 du dispositif 1 suite aux informations transmises par le serveur comme schématisé par la flèche 47.

On peut prévoir, également, de mémoriser dans le dispositif 1 les informations relatives à la transaction opérée (certificat de transaction stocké dans le dispositif 1).

Cette application porte-monnaie peut être avantageusement mise en oeuvre à l'aide du boîtier d'adaptation 26.

Inversement, à partir d'un dispositif 1 dans lequel a été chargée une somme d'argent, il est possible d'accéder à des services, des paris, ou des jeux, en prélevant la somme à payer sur celle stockée dans la mémoire de stockage 12.

Ce paiement permet, en particulier, la mise en oeuvre locale d'application de jeu ou télé pari (jeux de hasard, loteries, matches, courses de chevaux, ou analogues, etc...), notamment à partir d'une télévision ou d'un "MINITEL".

Le dispositif 1 de l'invention, notamment avec sa fonction porte-monnaie, est particulièrement adapté pour la télévision à péage.

Périodiquement, le dispositif peut servir au paiement à distance de l'abonnement à une télévision à péage et recevoir, du serveur, en échange de ce paiement, un code pour la période d'abonnement qui permettra à ce dispositif 1 de contrôler le désembrouillage de l'image.

Le dispositif 1 de l'invention peut permettre, toujours dans le cadre d'une télévision à péage, de payer uniquement pour une émission ou un film que l'utilisateur souhaite voir à une date déterminée.

Le dispositif 1, de l'invention, peut fournir un compte-rendu des films visionnés, notamment pour la mesure de l'audience, et pour le paiement des droits d'auteur.

Dans le cadre d'une animation télévisée ou similaire, il est possible d'envoyer des informations depuis une station émettrice, par voie hertzienne ou par des réseaux câblés de télévision, télématiques, informatiques, etc..., en faisant apparaître une mire sur l'écran du récepteur ou terminal, mire destinée à être lue par les phototransistors du dispositif 1 de l'invention plaqué sur l'écran. Les informations ainsi transmises peuvent permettre de sélectionner des gagnants à un jeu télévisé, et de mettre en place des jeux ou paris en direct sur la télévision.

Les animations ou programmes concernés peuvent être de différentes natures :
- il peut s'agir, par exemple, de jeux télévisés, d'émissions sportives, culturelles, pédagogiques, de films, etc... à l'occasion desquels le spectateur doit répondre à une ou plusieurs questions posées pendant ou à la fin du déroulement de l'émission ;
- il peut également s'agir de jeux de hasard du type loterie ou tirage dans lesquels, par exemple après téléchargement d'un nombre aléatoire ou pseudo-aléatoire dans le dispositif, le joueur dispose d'un certain délai pour effectuer, par l'intermédiaire du clavier 8, un pari pouvant consister en la mise d'une certaine somme ou d'un certain nombre de points préalablement chargés ou gagnés dans le dispositif. A l'issue de ce délai, le microcalculateur 4 traite le nombre téléchargé au moyen d'un algorithme approprié et affiche soit un gain, soit un nombre qui devra être comparé avec le résultat d'un tirage effectué au cours d'émission pour déterminer si le joueur a gagné, cette comparaison pouvant être effectuée dans le microcalculateur 4 grâce à une deuxième séquence de téléchargement par l'intermédiaire des moyens de réception R.

Les scénarios de jeux envisageables sont extrêmement nombreux et ne sont pas l'objet de la présente invention. Celle-ci vise entre autres à fournir un dispositif permettant à un individu de participer à une émission ou programme diffusé sur un écran en entrant par le clavier de son dispositif, au moment voulu, une ou plusieurs données représentatives de sa participation, qu'il s'agisse d'une ou plusieurs réponses à une ou plusieurs questions posées, en début, en cours ou en fin d'émission, d'un ou plusieurs nombres aléatoires choisis par l'individu dans le cadre d'une loterie, de la mise d'un certain montant (argent, points), etc...

Les données transmises au dispositif en faisant apparaître une mire sur l'écran comprennent essentiellement les informations suivantes :
- la nature du jeu diffusé, correspondant à un programme stocké dans la mémoire ROM 11 du microcalculateur 4 ;
- le déroulement chronologique du "jeu", dont les paramètres sont:
   * les instants auxquels le dispositif prie le joueur de répondre aux questions ;
   * le temps alloué pour chaque réponse ;
- les réponses correctes aux questions posées ;
- éventuellement les gains attribués aux bonnes réponses, ces gains pouvant, en variante, être programmés dans le microcalculateur en fonction de la nature du jeu détecté.

Bien entendu, la chronologie du scénario téléchargé dans le dispositif dont dispose l'utilisateur est synchronisée avec celle du déroulement de l'émission ou programme diffusé.

Dès que la mire appropriée (pavés lumineux) apparaît sur l'écran, l'utilisateur doit placer son dispositif contre celui-ci à l'endroit voulu. Les moyens de réception optique R convertissent les variations de luminosité de l'écran en signaux électriques qui sont convertis en signaux binaires du format voulu par les moyens de traitement 5. Les données reçues sont décodées par le microcalculateur 4 qui, lorsqu'il a reçu toutes les données voulues, fait apparaître sur l'écran 7 de l'afficheur 6 un message, tel que "PRET", indiquant que le dispositif est prêt à fonctionner.

L'utilisateur n'a plus alors qu'à regarder l'émission jusqu'à ce que la première question soit posée, soit oralement, soit sous forme écrite en incrustation sur l'écran. Le délai imparti pour répondre peut être affiché sur l'écran sous forme d'un décomptage en secondes, et parallèlement le microcalculateur 4 peut inviter l'utilisateur à répondre en affichant une information sur l'écran, par exemple le signe "?".

L'utilisateur entre alors sa réponse au clavier et la confirme en appuyant sur une des touches de fonction. Cette réponse n'est prise en compte dans le dispositif 1 que si elle est faite dans le délai imparti par le scénario téléchargé. Grâce au microcalculateur 4 programmé pour constituer, en liaison avec l'horloge, des moyens de temporisation, le scénario se déroule dans le dispositif 1 en synchronisme avec le déroulement du programme télévisé, le joueur, après chaque question posée à l'écran, entrant sa réponse au clavier dans le délai fixé.

Le microcalculateur 4 compare chaque réponse entrée au clavier 8 avec la bonne réponse téléchargée et stockée dans la mémoire 12 et actualise le score du joueur en fonction de paramètres qui, soit ont été téléchargés, soit font partie du programme du microcalculateur relatif au jeu considéré. Le microcalculateur peut également être programmé pour afficher sur l'écran 7 un message indiquant si le joueur a donné ou non la bonne réponse ("BRAVO", "DESOLE"), que cette bonne réponse soit donnée ou non à l'écran pendant ou à la fin de l'émission.

Le microcalculateur 4 peut être programmé pour afficher sur l'écran 7 le score ou gain obtenu par le joueur à la fin du jeu, soit en nombre de bonnes réponses, soit en nombre de points ou sous toute autre forme appropriée.

Le titulaire du dispositif 1 pourra ensuite renvoyer son gain, affiché par exemple sous forme codée sur l'écran 7 de son dispositif, sur un compte géré par un serveur auquel il pourra avoir accès au moyen de la procédure d'authentification décrite ci-dessus, précédée si nécessaire de la procédure d'identification.

En conclusion, les applications du dispositif de l'invention sont multiples, les supports peuvent comprendre la télématique, les réseaux câblés, la télédiffusion hertzienne, tandis que le terminal dont l'écran permet d'utiliser le dispositif 1 peut être un "MINITEL", un micro-ordinateur connecté ou non, ou une console de télévision. Le dispositif 1 peut fonctionner de manière autonome sur tout type d'écran sans lecteur spécial, ni une modification quelconque du terminal.

## Revendications

1. Dispositif portable électronique, comprenant au moins des moyens de réception optique (R), un microcalculateur (4) propre à traiter les informations reçues, un afficheur (6) pour afficher des informations provenant du microcalculateur, une source d'énergie électrique pour alimenter les divers circuits, un clavier (8) permettant à l'utilisateur d'entrer également des informations dans le microcalculateur (4), et des moyens (12) de mémorisation de données introduites par l'intermédiaire du clavier (8) et/ou des moyens de réception optique (R), caractérisé en ce que ledit microcalculateur (4) est en outre programmé pour :
- recevoir par l'intermédiaire des moyens de réception optique (R) et stocker dans les moyens de mémorisation (12) des données téléchargé representatives d'un scénario de participation à un programme télévisé diffusées par une station d'émission au début dudit programme et affichées sous forme optique avec ledit programme sur un écran, lesdites données téléchargées comprenant le déroulement chronologique dudit programme,
- autoriser la prise en compte, pendant au moins un délai prédéterminé imparti par ledit scénario téléchargé, de données introduites au clavier par l'utilisateur du dispositif en réponse à au moins une question ou interrogation posée dans le cadre du déroulement dudit programme, et
- traiter les données introduites au clavier en fonction desdites données téléchargées et produire un résultat ou gain fonction dudit traitement.

2. Dispositif selon la revendication 1, caractérisé en ce que ledit microcalculateur (4) est programmé pour produire ledit résultat ou gain par comparaison de réponses introduites au clavier (8) par l'utilisateur du dispositif (1) avec les réponses correctes à des questions posées dans le cadre du déroulement dudit programme, lesdites réponses correctes faisant partie desdites données téléchargées dans le dispositif au début dudit programme et stockées dans lesdits moyens de mémorisation (12).

3. Dispositif selon l'une quelconque des revendications 1 et 2, caractérisé par le fait que le microcalculateur (4) est programmé pour ne rendre le dispositif actif qu'après introduction, sur le clavier (8), d'un code confidentiel d'identification de l'utilisateur du dispositif.

4. Dispositif selon l'une quelconque des revendications 1 à 3, caractérisé par le fait qu'il comprend une mémoire de stockage (12) organisée en deux zones, à savoir une zone données et une zone personnalisation.

5. Dispositif selon la revendication 4, caractérisé par le fait que la mémoire de stockage (12) est réalisée en RAM et que l'accès en écriture de la zone personnalisation est protégé par un fusible grillé après personnalisation.

6. Dispositif selon l'une quelconque des revendications 1 à 5, caractérisé par le fait qu'il a la forme d'un boîtier (2) parallélépipédique rectangle plat, les moyens de réception optique étant constitués par des phototransistors (3) disposés sur la tranche d'un petit côté du boîtier.

7. Dispositif selon la revendication 6, caractérisé par le fait que le nombre des phototransistors (3) est au plus égal à trois, les phototransistors étant en particulier alignés.

8. Dispositif selon l'une des revendications précédentes, caractérisé par le fait qu'il comprend des moyens (5) propres à réaliser une auto-adaptativité à un écran, ces moyens comprenant une capacité (C) dont la charge et la décharge à travers une résistance (W) sont contrôlées par le microcalculateur (4), et permettant d'obtenir un seuil de comparaison fonction du niveau de réception optique.

9. Dispositif selon la revendication 6, caractérisé par le fait que les extrémités du côté du boîtier (2), comportant les phototransistors (3), sont munies de tampons (Q), notamment en matière élastomère, permettant un meilleur appui du boîtier contre un écran de terminal.

10. Dispositif selon l'une des revendications précédentes, caractérisé par le fait que le microcalculateur (4) est programmé de manière à bloquer le dispositif après entrées consécutives d'un certain nombre de codes confidentiels erronés, la réactivation du produit ne pouvant être assurée que par une procédure ou outil spécial.

11. Dispositif selon l'une des revendications précédentes, caractérisé par le fait que le microcalculateur (4) est programmé pour assurer, lorsque l'utilisateur du dispositif veut porter ledit résultat ou gain au crédit d'un compte géré par un serveur pourvu d'un terminal d'accès (13), une fonction d'authentification au niveau du serveur, en calculant, à partir d'informations provenant du serveur (S), suivant un algorithme, un code qui apparaît sur l'afficheur (6) du dispositif et que l'utilisateur (23) doit entrer sur un clavier (13c) du terminal (13) relié au serveur (S), un calcul de code étant effectué également par le serveur (S), suivant un algorithme semblable, et une comparaison du code calculé par le serveur et du code introduit par l'utilisateur étant effectuée par le serveur, l'accès au serveur pour la prise en compte dudit gain ou résultat étant donné lorsque cette comparaison établit une cohérence entre les deux codes.

12. Dispositif selon l'une quelconque des revendications précédentes, caractérisé par le fait qu'il comporte, en dehors d'une horloge système propre au microcalculateur, une horloge temps réel permettant notamment de donner au dispositif une durée de vie limitée.

13. Dispositif selon l'une quelconque des revendications précédentes, caractérisé par le fait que le clavier (8) est un clavier numérique associé à des touches de fonction et l'afficheur (6) est du type alphanumérique.

14. Dispositif selon l'une quelconque des revendications précédentes, caractérisé par le fait qu'il comporte des moyens d'entrée/sortie (10) reliés au microcalculateur (4) pour permettre une entrée et une sortie série, et qu'un boîtier d'adaptation (26) est prévu avec un logement débouchant à l'extérieur par une ouverture (27) dans laquelle peut être engagé le boîtier (2) du dispositif, le fond du logement (27) étant équipé de moyens complémentaires des moyens (10) du dispositif, le boîtier d'adaptation (26) étant raccordé à un câble (28) dont l'autre extrémité peut être branchée sur une prise (29) d'un terminal (13).

15. Dispositif selon l'une quelconque des revendications précédentes, caractérisé par le fait que le microcalculateur est programmé pour assurer une fonction porte-monnaie.

## Claims

1. A portable electronic device, including at least optical reception means (R), a microcomputer (4) suitable for processing the data received, a display device (6) for displaying data coming from the microcomputer, an electrical energy source for supplying the various circuits, a keyboard (8) enabling the user also to enter data into the microcomputer (4), and a data storage means (12) for storing data entered by means of the keyboard (8) and/or the optical reception means (R), characterized in that said microcomputer (4) is further programmed for:
- receiving by way of the optical reception means (R) and storing in the storage means (12) downloaded data about a game scenario for participation in a television program, said downloaded data being transmitted by a program transmitting unit at a beginning of said program and displayed in optical form with said program on a display means, said downloaded data including the chronological development of said program,
- authorizing taking into account, during at least one predetermined period imposed by said downloaded scenario, data entered at the keyboard by the user of the device in response to at least one displayed question or query outputted within the framework of the development of said program, and
- processing the data entered at the keyboard as a function of said downloaded data and outputting a result or gain based on said processing.

2. The device according to claim 1, characterized in that said microcomputer (4) is programmed for outputting said result or gain by comparing responses entered at the keyboard (8) by the user of the device (1) with the correct responses to questions posed with in a framework of the development of said program, said correct responses being part of said data that are downloaded into the device at a beginning of said program, and stored in said storage means (12).

3. The device according to any of claims 1 and 2, characterized in that said microcomputer (4) is programmed for activating the device only after keying in, on the keyboard (8), of a confidential identification code of the user of the device.

4. The device as set forth in any of claims 1 to 3, characterized in that it includes a protected storage memory (12) organized into two zones, namely, a data zone and a personalization zone.

5. The device as set forth in claim 4, characterized in that the storage memory (12) is constructed as an RAM and access to the personalization zone, by keying in, is protected by a fuse which is blown after personalization.

6. The device as set forth in any of claims 1 to 5, characterized in that it has the shape of a flat rectangular parallelepipedal box (2), the optical reception means consisting of phototransistors (3) placed on the edge of a small side of the box.

7. The device as set forth in claim 6, characterized in that the maximum number of phototransistors (3) is three, the phototransistors being in particular arranged in a straight line.

8. The device as set forth in any one of the preceding claims, characterized in that it includes means (5) suitable to apply self-adaptability to a screen, said means having a capacitor (C) whose charging and discharging through a resistor (W) are controlled by the microcomputer (4), and enabling one to obtain a comparison threshold based on the level of optical reception.

9. The device as set forth in claim 6, characterized in that the ends of the side of the box (2), comprising the phototransistors (3), are provided with buffers (Q), especially of an elastomer material, permitting better contact of the box with a terminal screen.

10. The device as set forth in any one of the preceding claims, characterized in that the microcomputer (4) is programmed such as to disable the device after the keying in, one after another, of a certain number of improper confidential codes, the reactivation of the product being assured only by a special procedure or by a special tool.

11. The device as set forth in any one of the preceding claims, characterized in that the microcomputer (4) is programmed to ensure, when the user of the device intends to credit said result or gain in an account managed by an information retrieval service having an access terminal (13), an authentication function at the information retrieval service by calculating, on the basis of data from the information retrieval service (S), using an algorithm, a code which appears on the display unit (6) of the device and that the user (23) must key in at a keyboard (13c) of a terminal (13) connected to the information retrieval service (S), while a code is also calculated by the information retrieval service (S), using a similar algorithm, and the code calculated by the information retrieval service is compared by the information retrieval service with the code keyed in by the user, whereby, if this comparison determines that there is a match between the two codes, access will be given to the information retrieval service for taking into account said result or gain.

12. The device as set forth in any one of the preceding claims, characterized in that it includes, in addition to the microcomputer's own clock system, a real-time clock which makes it possible among others to give the device a limited lifetime.

13. The device as set forth in any one of the preceding claims, characterized in that the keyboard (8) is a numerical keyboard associated with function keys and the display device (6) is of the alphanumeric type.

14. The device as set forth in any one of the preceding claims, characterized in that it includes inlet/outlet ports (10) connected to the microcalculator (4) to permit a serial inlet and outlet, and an adapter box (26) is provided with a housing which is exhausted to atmosphere through an opening (27) in which the box (2) of the device can be engaged, the bottom of the housing (27) being provided with means supplementary to the ports (10) of the device, the adapter box (26) being connected to a cable (28) whose other end can be plugged into a socket (29) of a terminal (13).

15. The device as set forth in any one of the preceding claims, characterized in that the microcomputer is programmed to ensure a money-transfer function.

## Patentansprüche

1. Tragbare elektronische Vorrichtung, die zumindest folgendes aufweist: optische Aufnahmemittel (R), einen Mikrocomputer bzw. Mikrorechner (4), welcher geeignet ist, die empfangen Informationen zu verarbeiten, Anzeigemittel (6) zum Anzeigen bzw. Darstellen der Informationen, die von dem Mikrocomputer erbalten wurden, eine elektrische Energiequelle zur Versorgung der verschiedenen Schaltungen, eine Tastatur (8), welche einem Benutzer gestattet, ebenfalls Informationen für den Mikrocomputer (4) einzugehen, und Speichermittel (12) für Daten, die mittels der Tastatur (8) und/oder der optischen Aufnahmemittel (R) eingegeben wurden, dadurch gekennzeichnet, daß der Mikrocomputer (4) außerdem programmiert ist zum:
- Empfang von ferngeladenen Daten mittels der optischen Aufnahmemittel (R) und zum Speichern derselben mittels der Speichermittel (12), wobei die ferngeladenen Daten representativ sind für eine Situation bzw. ein Szenario der Teilnahme an einem ferngesehenen Programm und die von einer Sendestation am Anfang des Programms ausgestrahlt werden und in optischer Form mit dem Programm auf einem Schirm angezeigt werden, wobei die ferngeladenen Daten den chronologischen Ablauf des Programms enthalten,
- Autorisieren oder Berechtigen zur Buchung der von dem Verwender der Vorrichtung über die Tastatur eingebenen Daten während mindestens einer vorbestimmten (Warte ) Zeit, die von der ferngeladenen Situation bewilligt oder vorgegeben ist, und zwar ansprechend auf mindestens eine gestellte Frage oder Befragung im Rahmen des Ablaufs des Programms und
- Verarbeiten der über die Tastatur eingegebenen Daten mittels der ferngeladenen Daten und erzeugen eines Resultats oder Ergebnisses mittels der Verarbeitung.

2. Vorrichtung nach Anspruch 1, dadurch gekennzeichnet, daß der Mikrocomputer (4) programmiert ist zum Erzeugen des Resultats oder Ergebnisses durch Vergleich der von dem Verwender der Vorrichtung (1) über die Tastatur (8) eingegebenen Antworten mit den korrekten Antworten auf die gestellten Fragen im Rahmen des Ablaufs des Programme, wobei die korrekten Antworten einen Teil der Daten bilden, die am Anfang des Programms in die Vorrichtung ferngeladen wurden und in den Speichermitteln (12) gespeichert wurden.

3. Vorrichtung gemäß einem der Ansprüche 1 oder 2, dadurch gekennzeichnet, daß der Mikrocomputer (4) programmiert ist, um die Vorrichtung nur dann zu aktivieren, nachdem über die Tastatur (8) ein Geheimcode zur Identifizierung des Verwenders der Vorrichtung eingegeben wurde.

4. Vorrichtung gemäß einem der Ansprüche 1 bis 3, dadurch gekennzeichnet, daß die Vorrichtung einen Speicher (12) aufweist, der in zwei Zonen organisiert ist, nämlich eine Datenzone und eine Anpassungs- oder Personalisierungszone.

5. Vorrichtung gemäß Anspruch 4, dadurch gekennzeichnet, daß der Speicher (12) als eln RAM ausgebildet ist und daß der Schreibzugriff auf die Personalisierungszone nach der Personalisierung durch ein löschbares Schutzgatter bzw. Maske (schmelzbares Gitter) geschützt ist.

6. Vorrichtung gemäß einem der Ansprüche 1 bis 5, dadurch gekennzeichnet, daß die Vorrichtung die Form eines Gehäuses (2) besitzt, welche ein flaches, rechteckiges Parallelepiped ist, wobei die optischen Empfangsmittel von Fototransistoren (3) gebildet werden, die auf dem Teil einer kleinen Seitenfläche des Gehäuses angeordnet sind.

7. Vorrichtung gemäß Anspruch 6, dadurch gekennzeichnet, daß die Anzahl der Fototransistoren (3) mindestens 3 ist, wobei die Fototransistoren insbesondere ausgerichtet sind.

8. Vorrichtung gemaß einem der vorhergehenden Ansprüche, dadurch gekennzeichnet, daß die Vorrichtung Mittel (5) aufweist, die geeignet sind, eine Autoadaptivität oder Selbstanpassung für den Schirm Vorzusehen, wobei diese Mittel einen Kondensator (C) aufweisen, dessen Ladung und Entladung über einen Widerstand (W) durch den Mikrocomputer (4) gesteuert wird, und wobei die Mittel gestatten, eine Vergleichsschwelle abhängig von dem optischen Empfangniveau zu erhalten.

9. Vorrichtung gemäß Anspruch 6, dadurch gekennzeichnet, daß die Kanten der Seite des Gehäuses (2), die die Fototransistoren (3) aufweist, mit Dämpfern oder Puffern (Q) ausgestattet sind, insbesonders aus einem Elastomermaterial, welche ein besseres Anlegen des Gehäuses gegen einen Terminal-Bildschirm gestatten.

10. Vorrichtung gemäß einem der vorhergehenden Ansprüche, dadurch gekennzeichnet, daß der Mikrocomputer (4) derart programmiert ist, daß er die Vorrichtung nach der aufeinanderfolgenden Eingabe einer gewissen Anzahl falscher Geheimcodes blockiert, wobei die Reaktivierung oder Wiederinbetriebnahme des Produkts nur gewährleistet werden kann mittels eines Spezialverfahrens oder eines Spezialwerkzeugs.

11. Vorrichtung gemäß einem der vorhergehenden Ansprüche, dadurch gekennzeichnet, daß der Mikrocomputer (4) programmiert ist, um eine Beglaubigungs- oder Berechtigungsfunktion auf der Anbieterebene zu gewährleisten, wenn der Verwender der Vorrichtung das Resultat oder Ergebnis auf dem Konto buchen will, das von einem Anbieter geführt wird, der mit einem Zugriffsterminal (13) versehen ist, wobei ausgehend von Informationen, die von dam Anbioter (S) geliefert werden, gemäß einem Algorithmus ein Code berechnet wird, der auf den Anzeigemitteln (6) der Vorrichtung erscheint und den der Verwender (23) über eine Tastatur (13c) des mit dem Anbieter (S) verbundenen Terminals eingeben muß, wobei ein Code ebenfalls von dem Anbieter (S) gemäß einem ähnlichem Algorithmus berechnet wird, und wobei ein Vergleich des von dem Anbieter berechneten Codes mit dem, von dem Verwender eingegebenen Code von dem Anbieter bewirkt wird, wobei der Zugriff auf den Anbieter für die Buchung des Resultats oder Ergebnisses gewährt wird, wenn der Vergleich eine Übereinstimmung zwischen den beiden Codes ergibt.

12. Vorrichtung gemäß einem der vorhergehenden Ansprüche, dadurch gekennzeichnet, daß die Vorrichtung neben einem Zeit- oder Uhrensystem, das dem Mikrocomputer eigen ist, eine Echtzeituhr aufweist, die insbesondere gestattet, der Vorrichtung eine begrenzte Lebensdauer zu geben.

13. Vorrichtung gemäß einem der vorhergehenden Ansprüche, dadurch gekennzeichnet, daß die Tastatur (8) eine numerische Tastatur ist, die mit Funktionstasten ausgestattet ist, und wobei die Anzeigemittel (6) von der alphanumerischen Art sind.

14. Vorrichtung gemaß einem der vorhergehenden Ansprüche, dadurch gekennzeichnet, daß die Vorrichtung Eingabe-/Ausgabe-Mittel (10) aufweist, die mit dem Mikrocomputer (4) verbunden sind, um eine Eingabe und eine Ausgabe in Reihe bzw. seriell zu gestatten, und daß ein Adapter- oder Anpassungs-Gehäuse (26) vorgesehen ist mit einem Sitz oder einer Anlage, die nach außen freiliegt durch eine Öffnung (27), durch die das Gehäuse (2) der Vorrichtung eingesetzt oder in Eingriff gebracht werden kann, wobei die Rückseite des Sitzes bzw. der Anlage (27) mit Mitteln ausgestattet ist, die den Mitteln (10) der Vorrichtung entsprechen, wobei das Adapter-Gehäuse (26) mit einem Kabel (28) verbunden ist, dessen anderes Ende an einen Anschluß (29) eines Terminals (13) angeschlossen werden kann.

15. Vorrichtung gemäß einem der vorhergehenden Ansprüche, dadurch gekennzeichnet, daß der Mikrocomputer programmiert ist, um die Funktion eines Geldbeutels zu gewährleisten.
